(19) Europäisches Patentamt
European Patent Office
Office européen des brevets

(11) Publication number: 0 512 647 A2

(12) **EUROPEAN PATENT APPLICATION**

(21) Application number: **92201283.6**

(51) Int. Cl.[5]: **C08G 67/02**

(22) Date of filing: **06.05.92**

(30) Priority: **08.05.91 NL 9100807**

(43) Date of publication of application:
**11.11.92 Bulletin 92/46**

(84) Designated Contracting States:
**BE DE FR GB NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Keijsper, Johannes Jacobus**
**Badhuisweg 3**
**NL-1031 CM Amsterdam(NL)**

(54) **Process for the preparation of linear alternating polymers of carbon monoxide and one or more olefins.**

(57) Process for the preparation of polymers wherein linear alternating polymers of carbon monoxide with one or more olefins having 3 to 10 carbon atoms per molecule ($C_{3-10}$ olefins) and optionally in addition with ethene are prepared by contacting the monomers at elevated temperature and pressure with a suitable catalyst in the presence of a liquid diluent consisting substantially of the $C_{3-10}$ olefin(s) used as monomer(s).

EP 0 512 647 A2

The invention relates to a process for the preparation of linear alternating polymers of carbon monoxide with one or more olefins.

The present polymers are alternating polymers, which implies that the units originating in carbon monoxide and the units originating in the olefin(s) are present in a substantially alternating order.

Linear alternating copolymers of carbon monoxide with ethene can be prepared by contacting the monomers at elevated temperature and pressure with a suitable catalyst in the presence of a liquid non-polymerizable diluent in which the polymers are insoluble or virtually insoluble. During the polymerization the polymers are obtained in the form of a suspension in the diluent. After the required degree of polymerization has been reached, the polymerization is generally terminated by cooling the suspension and releasing the pressure. The polymers are isolated from the suspension, for example by filtration or centrifuging. The pure diluent to be used for a following polymerization is recovered from the remaining liquid, for example by distillation.

In the aforesaid polymer preparation, both the polymerization rate and the average molecular weight of the resulting polymers play an important role. On the one hand it is desirable for the polymer preparation to achieve the highest possible reaction rate, while on the other hand, with a view to their applications, polymers are more valuable the higher their average molecular weight. Both the reaction rate and the average molecular weight can be influenced by the temperature employed in the polymerization. Unfortunately, the effects of the temperature on the polymerization rate and average molecular weight are in opposite directions in the sense that an increase in the reaction temperature leads to an increase in the reaction rate, but also to a decrease in the average molecular weight of the resulting polymers, assuming that the other reaction conditions remain unchanged.

From an investigation previously carried out by the applicant into the above-mentioned polymerization it was found that, while maintaining an acceptable polymerization rate and average molecular weight of the polymers prepared, there is a wide range of possibilities as regards the liquid non-polymerizable diluent in which the polymerization can be performed. Examples of suitable diluents are lower aliphatic alcohols such as methanol, aromatic hydrocarbons such as toluene, cyclic ethers such as tetrahydrofuran, aliphatic esters such as ethyl acetate and ketones such as acetone.

Linear alternating copolymers of carbon monoxide with ethene have a very high melting point. The processing of these polymers in the molten state takes suitably place with the material being at a temperature which is at least 25 °C above the melting point. It has been found that the resistance of these polymers to the high temperatures used in their melt processing can be less good than desirable. In a previous investigation by the applicant it was found that the melting point of these polymers can be reduced considerably by incorporating into the monomer mixture from which the polymers are prepared as a third monomer a small quantity of an olefin having 3 to 10 carbon atoms per molecule (indicated for brevity as $C_{3-10}$ olefin). The more of the third olefin incorporated into the monomer mixture, the lower the melting point of the resulting terpolymers. It was further found that, just as in the preparation of copolymers of carbon monoxide with ethene, also in the preparation of terpolymers of carbon monoxide with ethene and with a $C_{3-10}$ olefin, while maintaining an acceptable polymerization rate and average molecular weight of the polymers prepared, there is a wide range of possibilities as regards the liquid non-polymerizable diluent in which the polymerization is performed.

The applicant recently carried out an investigation in order to find out whether or not polymers of carbon monoxide with one or more $C_{3-10}$ olefins can be prepared using the above-mentioned diluents. It was found that the desired polymers can indeed be prepared, but only low polymerization rates could be achieved and the polymers prepared possessed a low average molecular weight. Although some gain in the polymerization rate could be obtained by raising the reaction temperature, this was accompanied by a drastic reduction in the average molecular weight of the polymers which was already low.

Continued research by the applicant into this subject has now surprisingly shown that polymers of carbon monoxide with one or more $C_{3-10}$ olefins can be prepared with a relatively high polymerization rate and yielding polymers with a relatively high average molecular weight, by carrying out the polymerization in a liquid diluent consisting substantially of one or more of the $C_{3-10}$ olefins used as monomers. In comparison with the earlier polymerization carried out at a given reaction temperature in a liquid non-polymerizable diluent, the process now proposed offers the unexpected advantage that at the same temperature a considerably higher polymerization rate can be achieved, while the resulting polymers, in addition, possess an appreciably higher average molecular weight.

The investigation showed that the process now found in which the polymerization is carried out in a liquid diluent consisting substantially of one or more of the $C_{3-10}$ olefins used as monomers is also eminently suitable for the preparation of linear alternating polymers of carbon monoxide with one or more $C_{3-10}$ olefins and additionally with ethene.

The present patent application therefore relates to a process for the preparation of polymers wherein linear alternating polymers of carbon monoxide with one or more olefins having 3 to 10 carbon atoms per molecule ($C_{3-10}$ olefins) and optionally in addition with ethene are prepared by contacting the monomers at elevated temperature and pressure with a suitable catalyst in the presence of a liquid diluent consisting substantially of the $C_{3-10}$ olefin(s) used as monomer(s).

In the process according to the invention, use is made of a liquid diluent substantially comprising one or more of the $C_{3-10}$ olefins employed as monomers. In addition to one or more of these $C_{3-10}$ olefins, the diluent can contain a small quantity of one or more non-polymerizable liquids such as methanol, tetrahydrofuran or acetone. If the diluent contains one or more non-polymerizable liquids besides one or more $C_{3-10}$ olefins, preferably less than 20 %v and in particular less than IS %v thereof is present, relative to the total volume of the liquid mixture.

The process according to the invention is preferably applied for the preparation of polymers of carbon monoxide with only one $C_{3-10}$ olefin and optionally additionally with ethene. As regards the $C_{3-10}$ olefins, there is further preference for the use of aliphatic olefins, more preferably aliphatic α-olefins and in particular those containing up to 5 carbon atoms per molecule, viz. the olefins propene, butene-1, 2-methylpropene, pentene-1, 2-methylbutene-1 and 3-methylbutene-1. There is particular preference for the use of the olefins propene, butene-1 and 2-methylpropene, which are gaseous at normal temperature and pressure. The simultaneous use of these olefins as monomer and as liquid diluent offers the advantage compared with the liquid non-polymerizable diluents used hitherto that the diluent evaporates at the end of the polymerization on releasing the pressure, so that the previously mentioned filtering or centrifuging step required for the isolation of the polymers can be omitted. The process according to the invention has been applied successfully to, inter alia, the preparation of copolymers of carbon monoxide with propene and the preparation of terpolymers of carbon monoxide with ethene and with propene, in both cases in the presence of a liquid diluent consisting substantially of propene.

In the process according to the invention a catalyst is used which is capable to catalyse the formation of the previously mentioned linear alternating polymers starting from a mixture of carbon monoxide with one or more $C_{3-10}$ olefins and optionally also with ethene. Suitable catalysts for the present purpose are, inter alia, those which contain a Group VIII metal. In this patent application, the Group VIII metals are understood to be the noble metals ruthenium, rhodium, palladium, osmium, iridium and platinum, as well as the iron group metals iron, cobalt and nickel. Catalysts containing palladium, nickel or cobalt as the Group VIII metal are preferred. Palladium is particularly preferred as the Group VIII metal. If the catalysts used in the process according to the invention include a Group VIII metal, its incorporation into the catalyst preferably takes place in the form of a salt of a carboxylic acid, in particular in the form of an acetate.

Besides a Group VIII metal, the catalysts preferably contain a bidentate ligand which can form a complex with the Group VIII metal via two phosphorus-, nitrogen- and/or sulphur-containing dentate groups. If a nitrogen bidentate ligand is used, there is a preference for compounds of the general formula

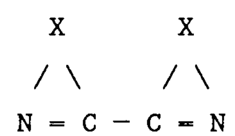

in which X represents an organic bridging group containing three or four atoms in the bridge, of which at least two are carbon atoms, such as 2,2'-bipyridine and 1,10-phenanthroline. If a sulphur bidentate ligand is used, there is preference for compounds of the general formula $R^1S$-R-$SR^1$ in which $R^1$ represents an optionally polar substituted hydrocarbyl group and R represents a divalent organic bridging group containing at least two carbon atoms in the bridge, such as 1,2-bis(ethylthio)ethane and cis-1,2-bis(benzylthio)-ethene. Preferably, phosphorus bidentate ligands are used of the general formula $R^2R^3P$-R-$PR^2R^3$ in which $R^2$ and $R^3$ are identical or different optionally polar substituted hydrocarbyl groups and in which R has the meaning indicated hereinbefore. In these phosphorus bidentate ligands the groups $R^2$ and $R^3$ can have a cyclic or acyclic structure. If they have a cyclic structure, they can be aromatic or alicyclic. If desired, the groups $R^2$ and $R^3$ together with the phosphorus atom can form part of a ring, for example a phosphacyclohexyl ring. If it is intended to use the catalysts for the preparation of polymers of carbon monoxide with one or more $C_{3-10}$ olefins (i.e. without ethene), there is preference for the use of phosphorus bidentate ligands in which the groups $R^2$ and $R^3$ are optionally polar substituted aliphatic hydrocarbyl groups. An example of a very suitable phosphorus bidentate ligand for this purpose is 1,3-bis(di-n-butylphosphino)propane. If it is intended to use the catalysts for the preparation of polymers of carbon

monoxide with one or more $C_{3-10}$ olefins and also with ethene, there is preference for the use of phosphorus bidentate ligands in which the groups $R^2$ and $R^3$ are optionally polar substituted aromatic hydrocarbyl groups. An example of a very suitable phosphorus bidentate ligand for this purpose is 1,3-bis-[bis(2-methoxyphenyl)phosphino]propane.

If in the catalysts use is made of a nitrogen or sulphur bidentate ligand, the quantity employed is preferably 0.5-100 and in particular 1-50 mol per gram atom Group VIII metal. If a phosphorus bidentate ligand is used, the quantity employed is preferably 0.5-2 and in particular 0.75-1.5 mol per gram atom Group VIII metal.

In addition to a Group VIII metal and a phosphorus, nitrogen or sulphur bidentate ligand, the catalysts preferably contain an anion of an acid with a pKa of less than 4 and in particular an anion of an acid with a pKa of less than 2. Examples of suitable acids with a pKa of less than 2 are mineral acids such perchloric acid, sulphonic acids such as para-toluenesulphonic acid and halocarboxylic acids such as trifluoroacetic acid. The incorporation of the anion of an acid with a pKa of less than 4 in the catalysts can take place in the form of an acid and/or in the form of a salt such as a nickel salt. Favourable results were obtained using catalysts containing trifluoroacetic acid as acid or nickel perchlorate as salt.

The anion is preferably present in the catalysts in a quantity of 1-100 and in particular 2-50 mol per gram atom Group VIII metal.

Besides catalysts on the basis of the three components mentioned hereinbefore, viz. a) a Group VIII metal compound, b) an acid with a pKa of less than 4 or a salt thereof, and c) a bidentate ligand containing two phosphorus-, nitrogen- and/or sulphur-containing dentate groups, corresponding catalysts are also eligible for the present purpose on the basis of two components by combining therein the components a) and b) such as by using palladium trifluoroacetate or palladium para-tosylate or by combining components b) and c) such as by using ortho-(diphenylphosphino)benzenesulphonic acid or 3-(diphenylphosphino)-propanesulphonic acid.

To enhance the activity of the Group VIII metal-containing catalysts, a 1,4-quinone can also be included therein. 1,4-benzoquinone and 1,4-naphthoquinone are very suitable for this purpose. The quantity of 1,4-quinone used is preferably 5-5000 and in particular 10-1000 mol per gram atom Group VIII metal.

The quantity of catalyst used in the process according to the invention can vary within wide limits. If a Group VIII metal-containing catalyst is used, preferably a quantity of catalyst is employed which contains $10^{-3}$-$10^4$ and in particular $10^{-2}$-$10^3$ mg Group VIII metal per 100 g $C_{3-10}$ olefin.

The process according to the invention is preferably carried out at a temperature of 25-150 °C and a pressure of 2-150 bar and in particular at a temperature of 30-130 °C and a pressure of 5-100 bar.

The invention will now be explained with reference to the following examples.

Example 1

A carbon monoxide/propene copolymer was prepared as follows. A stirred autoclave with a volume of 300 ml was charged with 110 ml tetrahydrofuran and 80 ml propene. After the contents of the autoclave had been brought to 42 °C, carbon monoxide was forced in to obtain a total pressure of 40 bar. Subsequently a catalyst solution was introduced into the autoclave consisting of:

| | |
|---|---|
| 8.5 ml | methanol, |
| 21.5 ml | tetrahydrofuran, |
| 0.043 mmol | palladium acetate, |
| 0.21 mmol | nickel perchlorate, |
| 0.052 mmol | 1,3-bis(di-n-butylphosphino)propane, and |
| 3.0 mmol | 1,4-naphthoquinone. |

After 64.5 hours the polymerization was terminated by cooling the reaction mixture to room temperature and releasing the pressure. The reaction mixture was mixed under stirring with methanol and the copolymer was filtered off, washed with methanol and dried. 63 g copolymer was obtained with a $\overline{DP}$ of 490. The polymerization rate was 214 g copolymer/(g palladium.hour).

Example 2

A carbon monoxide/propene copolymer was prepared in substantially the same way as in example 1, but with the following differences:

a) the autoclave was charged with 200 ml propene instead of 110 ml tetrahydrofuran and 80 ml propene,
b) a catalyst solution was used consisting of:

| | |
|---|---|
| 6 ml | methanol, |
| 12 ml | tetrahydrofuran, |
| 0.029 mmol | palladium acetate, |
| 0.16 mmol | nickel perchlorate, |
| 0.037 mmol | 1,3-bis(di-n-butylphosphino)propane, and |
| 2.9 mmol | 1,4-naphthoquinone, |

c) the contents of the autoclave were brought to 40 °C instead of 42 °C,
d) carbon monoxide was forced in to obtain a total pressure of 42 bar instead of 40 bar, and
e) the reaction time was 17 hours instead of 64.5 hours.

38.4 g copolymer was obtained with a $\overline{DP}$ >800. The polymerization rate was 745 g copolymer/(g palladium.hour).

Example 3

A carbon monoxide/propene copolymer was prepared in substantially the same way as in example 2, but with the following differences:
a) the catalyst solution contained 0.036 mmol 1,3-bis(3,4-dimethoxyphospholano)propane instead of 1,3-bis(di-n-butylphosphino)propane, and
b) the reaction time was 65 hours instead of 17 hours.

100.3 g copolymer was obtained with a $\overline{DP}$ of 700. The polymerization rate was 509 g copolymer/(g palladium.hour).

Example 4

A carbon monoxide/ethene/propene terpolymer was prepared as follows. A stirred autoclave with a volume of 300 ml was charged with 200 ml propene. After the contents of the autoclave had been brought to 70 °C, 10 bar carbon monoxide was forced in and then ethene until a total pressure of 52 bar was reached. Subsequently a catalyst solution was introduced into the autoclave consisting of:

| | |
|---|---|
| 8 ml | methanol, |
| 4 ml | acetone, |
| 0.02 mmol | palladium acetate, |
| 0.4 mmol | trifluoroacetic acid, and |
| 0.022 mmol | 1,3-bis[bis-(2-methoxyphenyl)phosphino]propane. |

After 17 hours the polymerization was terminated by cooling the reaction mixture to room temperature and releasing the pressure. The reaction mixture was mixed under stirring with methanol and the terpolymer was filtered off, washed with methanol and dried. 10 g terpolymer was obtained with a $\overline{DP}$ >1000. The polymerization rate was 280 g terpolymer/(g palladium.hour).

The parameter $\overline{DP}$ mentioned in the examples relates to the average degree of polymerization of the polymers as determined by end group analysis using $^{13}$C-NMR analysis. This parameter is a measure for the average molecular weight of the polymers, in the sense that the higher the average molecular weight of the polymers the higher their $\overline{DP}$.

Of the examples 1-4, examples 2-4 are according to the invention. In these examples carbon monoxide/propene copolymers and carbon monoxide/ethene/propene terpolymers were prepared in the presence of a liquid diluent consisting substantially of propene. Example 1 falls outside the scope of the invention and is included herein for comparison. In this example carbon monoxide/propene copolymers were prepared in the conventional manner in the presence of tetrahydrofuran as a liquid non-polymerizable diluent.

The favourable effects on the polymerization rate and average molecular weight of the polymers prepared occuring when the polymer is prepared according to the invention can be clearly seen by comparison of the results of examples 2 and 3 with those of example 1. In examples 2 and 3 (according to

the invention) polymerization rates were obtained of 745 and 509 g copolymer/(g palladium.hour) and copolymers were obtained with a $\overline{DP}$ of >800 and 700, respectively. In example 1 (not according to the invention) the polymerization rate was only 214 g copolymer/(g palladium.hour) and the prepared copolymer had a $\overline{DP}$ of only 490. Example 4 demonstrates that the process according to the invention is also very suitable for the preparation of carbon monoxide/ethene/propene terpolymers.

By means of $^{13}$C-NMR analysis it was further established that the polymers prepared according to examples 1-4 consisted substantially of linear chains in which the units originating in carbon monoxide and the units originating in the olefins were present in an alternating order. In the terpolymer chains the units originating in ethene and propene occurred in a random order relative to each other.

## Claims

1. Process for the preparation of polymers wherein linear alternating polymers of carbon monoxide with one or more olefins having 3 to 10 carbon atoms per molecule ($C_{3-10}$ olefins) and optionally in addition with ethene are prepared by contacting the monomers at elevated temperature and pressure with a suitable catalyst in the presence of a liquid diluent consisting substantially of the $C_{3-10}$ olefin(s) used as monomer(s).

2. Process according to claim 1, characterized in that the liquid diluent contains in addition to the $C_{3-10}$ olefin(s) one or more non-polymerizable liquids in a quantity of less than 15 %v relative to the total volume of the liquid mixture.

3. Process according to claim 1 or 2, characterized in that the $C_{3-10}$ olefin(s) is (are) aliphatic a-olefin(s) containing up to 5 carbon atoms per molecule.

4. Process according to one or more of claims 1-3, characterized in that $C_{3-10}$ olefins are used which are gaseous at normal temperature and pressure.

5. Process according to one or more of claims 1-4, characterized in that it is used for the preparation of copolymers of carbon monoxide with propene or for the preparation of terpolymers of carbon monoxide with ethene and with propene, in both cases in the presence of a liquid diluent consisting substantially of propene.

6. Process according to one or more of claims 1-5, characterized in that the catalyst comprises a Group VIII metal.

7. Process according to claim 6, characterized in that the catalyst comprises palladium as the Group VIII metal and in addition to the Group VIII metal a bidentate ligand which can form a complex with the Group VIII metal, via two phosphorus-, nitrogen- and/or sulphur-containing dentate groups, and in that the catalyst further comprises an anion of an acid with a pKa of less than 4.

8. Process according to claim 7, characterized in that the catalyst comprises a phosphorus bidentate ligand of the general formula $R^2R^3P\text{-}R\text{-}PR^2R^3$ in which $R^2$ and $R^3$ are identical or different optionally polar substituted hydrocarbyl groups and R represents a divalent organic bridging group containing at least two carbon atoms in the bridge.

9. Process according to claim 8, characterized in that the catalyst contains the phosphorus bidentate ligand in a quantity of 0.75-1.5 mol per gram atom Group VIII metal and the anion of an acid with a pKa of less than 4 in a quantity of 2-50 mol per gram atom Group VIII metal.

10. Process according to one or more of claims 6-9, characterized in that per 100 g $C_{3-10}$ olefin a quantity of Group VIII metal-containing catalyst is used which contains $10^{-2}$-$10^3$ mg Group VIII metal and in that the process is carried out at a temperature of 30-130 °C and a pressure of 5-100 bar.